# EUROPÄISCHE PATENTSCHRIFT

(11) **EP 0 496 967 B1**
(45) Veröffentlichungstag und Bekanntmachung des Hinweises auf die Patenterteilung: **19.01.1994**
(21) Anmeldenummer: 91119824.0
(22) Anmeldetag: 21.11.1991
(51) Int. Cl.: B23B 31/30

(54) **Spanneinrichtung an Werkzeugmaschinen mit einem umlaufenden Spannzylinder**
Chucking device for machine tool with rotating chucking cylinder
Mandrin de serrage à piston rotatif pour machine outil

(30) Priorität: 29.01.1991 DE 4102563
(43) Veröffentlichungstag der Anmeldung: 05.08.1992
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- DE-A- 3 117 850
- DE-C- 3 938 099

## Beschreibung

Die Erfindung betrifft eine Spanneinrichtung an Werkzeugmaschinen mit einem umlaufenden Spannzylinder und einem darin mitumlaufend angeordneten, axial verschiebbaren Spannkolben, ferner mit einem Verteiler, der ein die Anschlüsse für das Arbeitsmedium tragendes Verteilergehäuse und eine mit dem Spannkolben verbundene und in der Wand des Spannzylinders axial verschiebbare Verteilerwelle umfaßt, auf der das Verteilergehäuse so angeordnet ist, daß die Verteilerwelle darin umlaufen kann und das Verteilergehäuse bei den Axialverschiebungen des Spannkolbens mitnimmt, und mit einer Kontrolleinrichtung für die Axialverschiebungen des Spannkolbens, bestehend aus mindestens einem Schaltstück und mindestens einem davon betätigbaren Schaltglied, von welchen das Schaltglied mit dem Verteilergehäuse verbunden und das Schaltstück an einer Schaltstange angeordnet ist, die axial längsverschieblich in einer Führungsaufnahme am Verteilergehäuse geführt ist, die ferner an der dem Spannkolben zugewandten Stirnseite an einen Reiter angeschlossen ist und die mittels eines am Spannzylinder angeordneten Drehlagers gegen Axialverschiebungen relativ zum Spannzylinder festgelegt ist, wozu das Drehlager einen in Bezug auf den Spannzylinder koaxialen, drehbaren und axial unverschiebbaren Lagerring aufweist, auf dem der Reiter mit axialem Formschluß radial verschieblich sitzt.

Aus der DE-C-39 38 099 sind Spanneinrichtungen dieser Art bekannt, die den Vorteil bieten, daß die Schaltstange und das Schaltstück eine Baueinheit bilden, die gegen andere entsprechend ausgebildete Baueinheiten mit lediglich anders an der Schaltstange angeordneten Schaltstücken ausgewechselt werden kann, um die Schaltfunktion des Schaltstücks zu ändern, ohne daß das Schaltstück an der Schaltstange verstellt werden muß. Dazu ist die Schaltstange in der Führungsaufnahme drehbar um die Stangenachse angeordnet und an den Reiter mit einem Bajonettverschluß angeschlossen, der durch Drehen der Schaltstange geöffnet bzw. geschlossen werden kann. Zum Auswechseln wird die Schaltstange bei offenem Bajonettverschluß in Richtung der Stangenachse aus der Führungsaufnahme herausgezogen bzw. in sie hineingeschoben. Der Reiter bedarf einer eigenen selbständigen Führung am Verteilergehäuse, damit er bei offenem Bajonettverschluß gehalten ist. Dazu sitzt der Reiter an einem Führungsstab,der seinerseits am Verteilergehäuse in Stablängsrichtung geführt ist. Um den Reiter auch gegen Verdrehen um den Führungsstab zu sichern, liegt er dem Lagerring über einen Teil des Ringumfangs an.

Der Erfindung liegt die Aufgabe zugrunde, eine Spanneinrichtung der eingangs genannten Art so weiter auszubilden und zu verbessern, daß bei einfacherem konstruktivem Aufbau der Austausch der Schaltstange mit dem Schaltstück leichter möglich ist.

Diese Aufgabe wird nach der Erfindung dadurch gelöst, daß die Führungsaufnahme in eine am Verteilergehäuse angeordnete Führungsschale und einen Führungsdeckel geteilt ist, der geöffnet werden kann, und daß bei geöffnetem Führungsdeckel die Schaltstange mit dem Reiter und dem Schaltstück quer zur Stangenachse aus der Führungsschale entnehmbar bzw. in sie einlegbar ist.

Bei der erfindungsgemäßen Spanneinrichtung wird zum Wechsel der Schaltfunktion die Baueinheit aus Schaltstange, Schaltstück und Reiter senkrecht zur Stangenachse bei geöffnetem Führungsdeckel aus der Führungsschale entnommen und durch eine andere Einheit ersetzt, die wiederum quer zur Stangenachse in die Führungsschale eingelegt werden kann. Der so durchgeführte Umbau ist einfach und zeitsparend. Ein weiterer Vorteil besteht darin, daß der Reiter keiner weiteren Führung bedarf, da er immer mit der Schaltstange verbunden bleibt und mit ihr von der Spanneinrichtung abgenommen wird. Dies bedeutet eine Vereinfachung der Konstruktion und Handhabung der Kontrolleinrichtung.

Eine bevorzugte Ausführungsform ist dadurch gekennzeichnet, daß die Schaltstange undrehbar um die Stangenachse in der Führungaufnahme angeordnet und drehfest mit dem Reiter verbunden ist. Dadurch wird erreicht, daß mit der Schaltstange auch der Reiter selbst gegen Drehungen gesichert ist, was die Konstruktion des Reiters und seiner Verbindung mit dem Lagerring weiter vereinfacht. Vorteilhafterweise besitzen die Schaltstange und die Führungsaufnahme einen quadratischen oder rechteckigen Querschnitt auf. Dies stellt eine besonders einfache drehsichere Lagerung der Schaltstange in der Führungsaufnahme dar, ohne daß es noch zusätzlicher konstruktiver Maßnahmen bedarf. Gleichzeitig wird auf diese Weise der mit der Schaltstange verbundene Reiter beim Einlegen der Schaltstange in die Führungsaufnahme in die für seine Verbindung mit dem Lagerring erforderliche Lage ausgerichtet. Zweckmäßigerweise weist der Reiter den Lagerring axial beidseits umschließende Backen und eine dazwischen angeordnete Nase auf, die in Umfangsrichtung formschlüssig radial in eine Ausnehmung des Lagerrings greift. Der Reiter kann daher radial an den Lagerring angesteckt werden und sichert im angesteckten Zustand außerdem den Lagerring gegen Drehung.

Vorteilhafterweise ist die Schaltstange mit dem Reiter verschraubt, und der Reiter weist eine der Schaltstange seitlich anliegende, ihn gegen Drehung an der Schaltstange sichernde Schulter auf. Daher genügt für die Verschraubung eine einzige Schraube.

In einer vorteilhaften Ausführung ist der Führungsdeckel als Träger der Schaltglieder ausgebildet. Beim Öffnen des Führungsdeckels werden damit auch die Schaltglieder so von der Schaltstange entfernt, daß sie das Schaltstück bzw. die Schaltstücke freigeben. Somit ist gewährleistet, daß die Schaltglieder die Entnahme der Schaltstange und der daran sitzenden Schaltstücke nicht behindern. Hierfür weist zweckmäßigerweise der Führungsdeckel sich parallel zur Schaltstange erstreckende Tragschienen auf, an denen die Schaltglieder in Schienenlängsrichtung verstellbar angeordnet sind. Dadurch bleibt - bezogen auf die Schaltstangenachse - der radiale Abstand des Schaltstücks, bzw. der Schaltstücke von den Schaltgliedern bei der Verstellung der Schaltstange konstant. Der Führungsdeckel ist vorteilhafterweise mit Langlöchern versehen, deren Längsachsen in axialer Richtung verlaufen und die zur Befestigung des Führungsdeckels am Verteilergehäuse dienen. - Durch die Langlöcher greift jeweils eine Schraube in eine hierfür vorgesehene Gewindebohrung im Verteilergehäuse. Somit können die Schaltglieder zusätzlich zu ihrer Einzelverstellung an den Tragschienen auch in ihrer Gesamtheit durch Verschieben des Führungsdeckels in axialer Richtung verstellt werden. Dabei bleibt die relative Lage der Schaltglieder zueinander unverändert.

Die Tragschienen sind vorzugsweise mit Längsschlitzen versehen, in denen die Schaltstücke verschiebbar geführt und an den Tragschienen feststellbar sind. Dadurch können die Schaltglieder kontinuierlich in axialer Richtung verstellt und einfach und schnell mit einer Klemmschraube an der Tragschiene festgespannt werden.

In einer zweckmäßigen Ausführungsform weisen die Tragschienen jeweils in Schienenlängsrichtung verlaufende und im Schienenquerschnitt gegeneinander geneigte, Tragflansche auf. Dabei können die Tragflansche je einen eigenen Längsschlitz besitzen. Die in Längsrichtung der Schaltstange aufeinander folgenden Schaltglieder können dann wechselnd an den verschiedenen Tragflanschen angeordnet werden, was eine dichtere Reihung der Schaltglieder entlang der Schaltstange ermöglicht, als wenn die Tragschienen nur einen einzigen Tragflansch besäßen.

Im folgenden wird die Erfindung an einem in der Zeichnung dargestellten Ausführungsbeispiel näher erläutert; es zeigen:

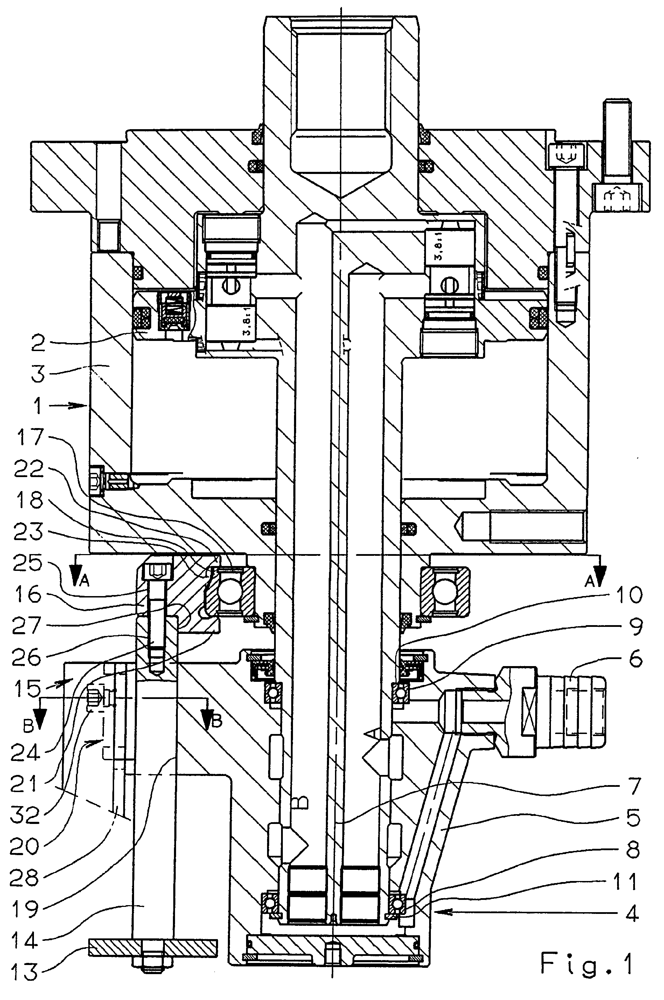

- Fig. 1: einen Axialschnitt durch einen Spannzylinder mit Verteiler und Kontrolleinrichtung,

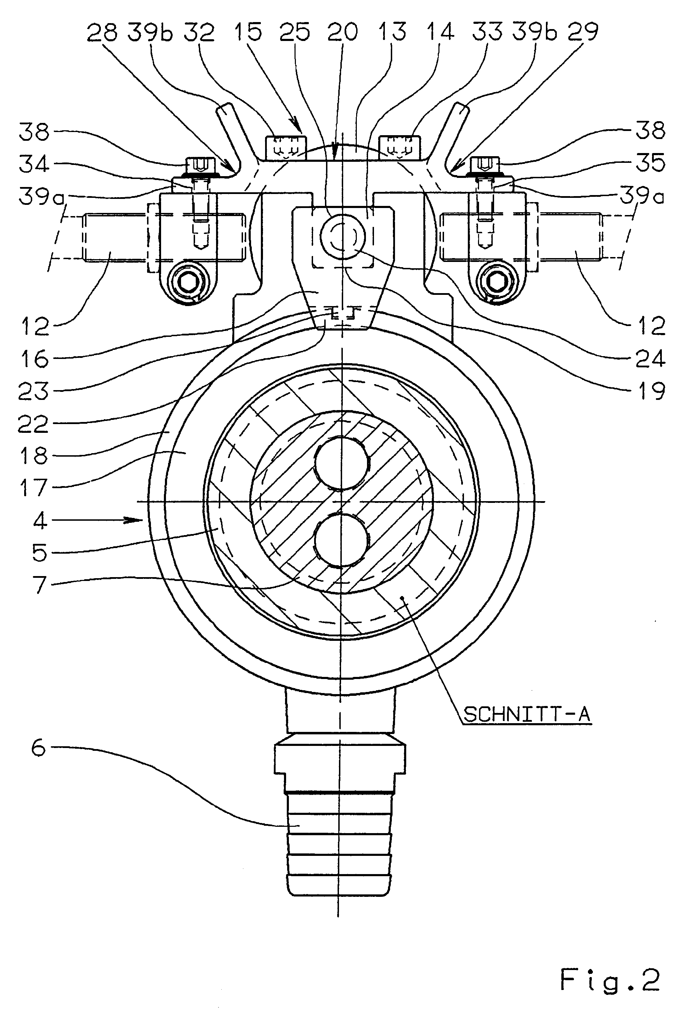

- Fig. 2: einen Querschnitt längs der Linie A-A durch den Gegenstand nach Fig. 1,

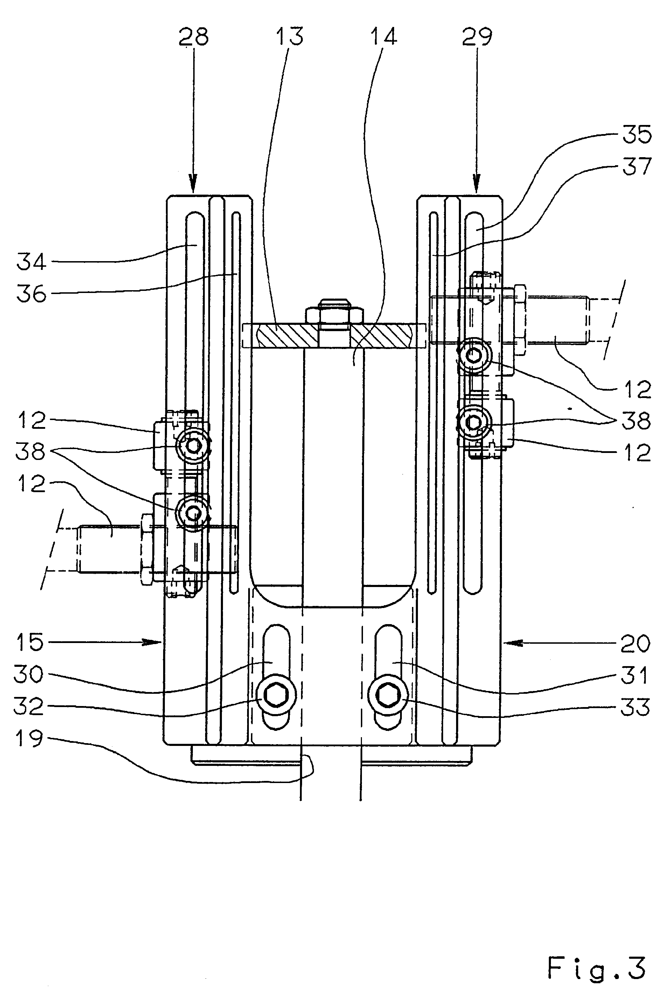

- Fig. 3: die Kontrolleinrichtung der Spanneinrichtung in der Draufsicht,
- Fig. 4: die Kontrolleinrichtung im Querschnitt längs der Linie B-B in Fig. 1,
- Fig. 5: den Gegenstand der Fig. 4 bei einer anderen Anordnung der Schaltglieder.

Der in der Zeichnung dargestellte Spannzylinder 1 für Spanneinrichtungen an Werkzeugmaschinen besitzt ein Zylindergehäuse 3 mit einem darin verschiebbaren Spannkolben 2, der an eine nicht dargestellte Spannstange der Spanneinrichtung angeschlossen werden kann. Normalerweise ist das Zylindergehäuse 3 am Ende der nicht dargestellten Werkzeugmaschinenspindel befestigt und läuft einschließlich des Spannkolbens 2 mit dieser um.

An den Spannzylinder 1 ist ein allgemein mit 4 bezeichneter Verteiler angeschlossen. Dieser Verteiler besitzt ein nicht mit dem Spannzylinder rotierendes Verteilergehäuse 5, das seitlich liegende Anschlüsse 6 für das den Spannzylinder 1 betätigende Arbeitsmedium trägt. Im Verteilergehäuse 5 läuft eine Verteilerwelle 7 um, die mittels Lager 8, 9 im Verteilergehäuse 5 gelagert ist. Das Lager 9 liegt axial an einer Schulter 10 der Verteilerwelle, das Lager 8 auf der anderen Seite an einem Sicherungsring 11 an, so daß das Verteilergehäuse 5 auf der Verteilerwelle 7 axial unverrückbar gehalten ist. Die Verteilerwelle 7 ist fest mit dem Spannkolben 2 verbunden und axial verschiebbar in der Wand des Spannzylinders 1 gelagert. Im Ergebnis wird eine Verstellung des Spannkolbens 2 in axialer Richtung unverändert über die Verteilerwelle 7 auf das Verteilergehäuse 5 übertragen.

Die Zu- und Abführung sowie die Steuerung des Arbeitsmediums zu einer der beiden Seiten des Spannkolbens 2 erfolgt in üblicher Weise und bedarf keiner Beschreibung.

Zur Wegkontrolle der Axialverschiebungen des Spannkolbens 2 ist eine Kontrolleinrichtung vorgesehen, die in der Regel mehrere Schaltglieder 12, beispielsweise Berührungsschalter, und wenigstens ein Schaltstück 13 zur Betätigung der Schaltglieder 12 aufweist. Die Schaltglieder 12 sind mit dem Verteilergehäuse 5 verbunden. Das Schaltstück 13 ist an einer Schaltstange 14 befestigt. Die Schaltstange 14 wird in einer Führungsaufnahme 15 am Verteilergehäuse 5 so geführt, daß sie in axialer Richtung verschiebbar ist. An der Stirnseite der Schaltstange 14, die dem Spannkolben 2 zugewandt ist, ist ein Reiter 16 angeschlossen. Der Reiter 16 ist mit einem Drehlager 17 am Spannzylinder 1 so verbunden, daß der Reiter 16 und mit ihm Schaltstange 14 gegen Verschiebungen relativ zum Spannzylinder 1 festgelegt sind. Dazu besitzt das Drehlager 17 einen in Bezug auf den Spannzylinder 1 koaxialen, drehbaren und axial unverschiebbaren Lagerring 18. Auf diesem Lagerring 18 sitzt der Reiter 16 mit axialem Formschluß radial verschieblich auf.

Die Führungsaufnahme 15 ist in eine am Verteilergehäuse 5 angeordnete Führungsschale 19 und einen Führungsdeckel 20 geteilt. Der Führungsdeckel 20 kann geöffnet werden, so daß die Schaltstange 14 zusammen mit dem Reiter 16 und dem Schaltstück 13 quer zur Stangenachse aus der Führungsschale 19 entnommen bzw. in die Führungsschale 19 eingelegt werden kann. Die Schaltstange sowie die Führungsaufnahme weisen einen quadratischen Querschnitt auf. Daher kann die Schaltstange 14 nicht um ihre Längsachse gedreht werden. Der Reiter 16 wiederum ist drehfest mit der Schaltstange 14 verbunden, so daß auch der Reiter 16 drehfest gelagert ist. An seiner der Verteilerwelle 7 zugewandten Seite greift der Reiter 16 am Lagerring 18 an. Dazu besitzt der Reiter 16 zwei Backen 21, 22, die den Lagerring 18 in axialer Richtung beidseits umschließen, sowie eine Nase 23, die zwischen den beiden Backen angeordnet ist. Die Nase 23 greift in Umfangsrichtung formschlüssig radial in eine Ausnehmung des Lagerrings 18, wodurch der Lagerring 18 gegen Verdrehen gesichert ist. Die Schaltstange 14 ist mit dem Reiter 16 durch eine Schraube 24 verschraubt. Hierfür sind sowohl im Reiter 16 als auch in der Schaltstange 14 in axialer Richtung verlaufende Bohrungen 25, 26 vorgesehen. Der Reiter 16 weist eine Schulter 27 auf, auf der die Schaltstange 14 seitlich aufliegt. Diese Vorrichtung zusammen mit der Schraubverbindung 24 sichern den Reiter 16 gegen Verdrehen gegenüber der Schaltstange 14.

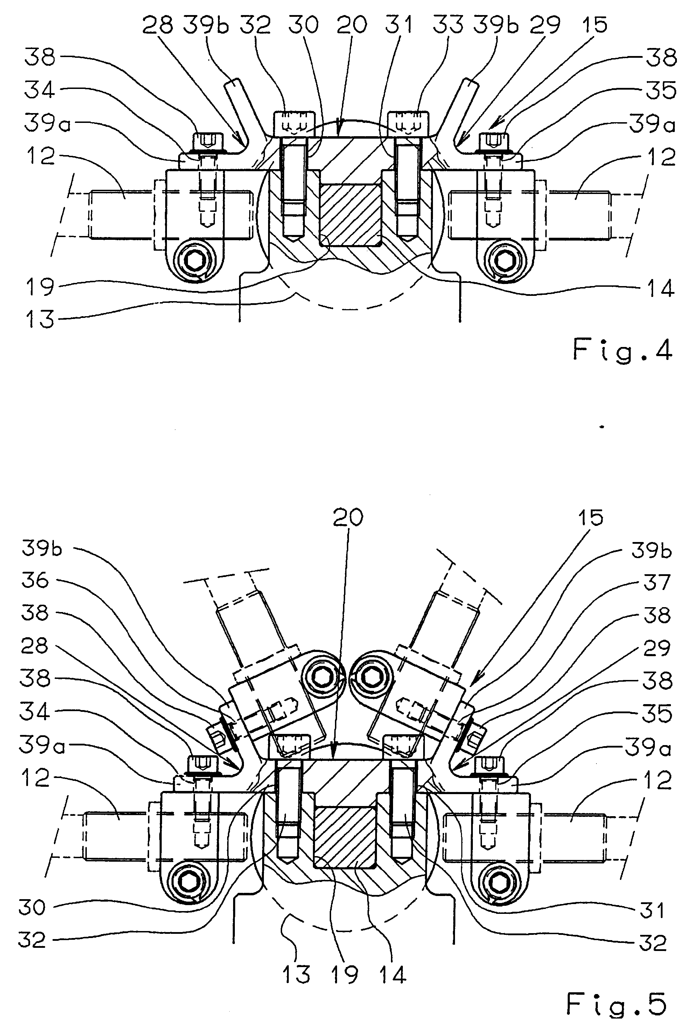

Der Führungsdeckel 20 ist als Träger der Schaltglieder 12 ausgebildet. Er weist zwei Tragschienen 28, 29 auf, die sich parallel zur Schaltstange 14 erstrecken. Dabei ragen die Tragschienen 28, 29 an der dem Spannzylinder 1 abgewandten Seite über die Führungsschale 19 hinaus. Der Führungsdeckel 20 ist mit zwei Langlöchern 30, 31 versehen, deren Längsachsen parallel zur Schaltstange 14 verlaufen. Mit je einer Schraube 32, 33 wird über die Langlöcher 30, 31 der Führungsdeckel 30 an der Führungsschale 19 befestigt. Außerdem kann über die Langlöcher 30, 31 die Position des Führungsdeckels 20 gegenüber der Führungsschale 19 in axialer Richtung kontinuierlich verändert werden. Dadurch können alle Schaltglieder 12 in ihrer Gesamtheit relativ zum Schaltstück 13 in ihrer axialen Position verändert werden. Die Tragschienen 28, 29 sind mit Längsschlitzen 34 bis 37 versehen. In ihnen sind die Schaltglieder 12 verschiebbar geführt und über Schrauben 38 befestigt. Desweiteren können die Schaltglieder 12 entlang der Längsschlitze 34 bis 37 in ihrer axialen Position verstellt werden. Fig. 4 zeigt eine Anordnung, in der alle Schaltglieder 12 in einer gemeinsamen Ebene angeordnet sind. In Fig. 5 dagegen ist eine Anordnung gezeigt, in der die Schaltglieder 12 in mehreren Ebenen angeordnet sind. Hierzu weisen die Tragschienen 28, 29 jeweils zwei Tragflansche 39a, 39b auf, die im Schienenquerschnitt gegeneinander geneigt sind. Die Ebenen der beiden Tragflansche 39a, 39b sind ca. 70° gegeneinander geneigt sind. Die Schaltglieder 12 sind wechselnd an den Tragflanschen 39a, 39b befestigt. Durch diese versetze Anordnung in zwei Ebenen können die Schaltglieder 12 entlang der Schaltstange 14 besonders dicht angeordnet sein. Auf diese Weise kann eine dichte Schaltfolge der Kontrolleinheit erzielt werden. Für die Befestigung der Schaltglieder 12 weist jeder Tragflansch 39a, 39b jeweils einen Längsschlitz 34 bis 37 auf.

## Patentansprüche

1. Spanneinrichtung an Werkzeugmaschinen mit einem umlaufenden Spannzylinder (1) und einem darin mitumlaufend angeordneten, axial verschiebbaren Spannkolben (2), ferner mit einem Verteiler (4), der ein die Anschlüsse (6) für das Arbeitsmedium tragendes Verteilergehäuse (5) und eine mit dem Spannkolben (2) verbundene und in der Wand des Spannzylinders (1) axial verschiebbare Verteilerwelle (7) umfaßt, auf der das Verteilergehäuse (5) so angeordnet ist, daß die Verteilerwelle (7) darin umlaufen kann und das Verteilergehäuse (5) bei den Axialverschiebungen des Spannkolbens (2) mitnimmt, und mit einer Kontrolleinrichtung für die Axialverschiebungen des Spannkolbens (2), bestehend aus mindestens einem Schaltstück (13) und mindestens einem davon betätigbaren Schaltglied (12), von welchen das Schaltglied (12) mit dem Verteilergehäuse (5) verbunden und das Schaltstück (13) an einer Schaltstange (14) angeordnet ist, die axial längsverschieblich in einer Führungsaufnahme (15) am Verteilergehäuse (5) geführt ist, die ferner an der dem Spannkolben (2) zugewandten Stirnseite an einen Reiter (16) angeschlossen ist und die mittels eines am Spannzylinder (1) angeordneten Drehlagers (17) gegen Axialverschiebungen relativ zum Spannzylinder (1) festgelegt ist, wozu das Drehlager (17) einen in Bezug auf den Spannzylinder (1) koaxialen, drehbaren und axial unverschiebbaren Lagerring (18) aufweist, auf dem der Reiter (16) mit axialem Formschluß radial verschieblich sitzt, dadurch gekennzeichnet, daß die Führungsaufnahme (15) in eine am Verteilergehäuse (5) angeordnete Führungsschale (19) und einen Führungsdeckel (20) geteilt ist, der geöffnet werden kann, und daß bei geöffnetem Führungsdeckel (20) die Schaltstange (14) mit dem Reiter (16) und dem Schaltstück (13) quer zur Stangenachse aus der Führungsschale (19) entnehmbar bzw. in sie einlegbar ist.

2. Spanneinrichtung nach Anspruch 1, dadurch gekennzeichnet, daß die Schaltstange (14) undrehbar um die Stangenachse in der Führungsaufnahme (15) angeordnet und drehfest mit dem Reiter (16) verbunden ist.

3. Spanneinrichtung nach Anspruch 1 oder 2, dadurch gekennzeichnet, daß die Schaltstange (14) und die Führungsaufnahme (15) einen quadratischen oder rechteckigen Querschnitt aufweisen.

4. Spanneinrichtung nach einem der Ansprüche 1 bis 3, dadurch gekennzeichnet, daß der Reiter (16) den Lagerring (18) axial beidseits umschließende Backen (21, 22) und eine dazwischen angeordnete Nase (23) aufweist, die in Umfangsrichtung formschlüssig radial in eine Ausnehmung des Lagerrings (18) greift.

5. Spanneinrichtung nach einem der Ansprüche 1 bis 4, dadurch gekennzeichnet, daß die Schaltstange (14) mit dem Reiter (16) verschraubt ist und der Reiter (16) eine der Schaltstange (14) seitlich anliegende, ihn gegen Drehung an der Schaltstange (14) sichernde Schulter (27) aufweist.

6. Spanneinrichtung nach einem der Ansprüche 1 bis 5, dadurch gekennzeichnet, daß der Führungsdeckel (20) als Träger der Schaltglieder (12) ausgebildet ist.

7. Spanneinrichtung nach Anspruch 6, dadurch gekennzeichnet, daß der Führungsdeckel (20) sich parallel zur Schaltstange (14) erstreckende Tragschienen (28, 29) aufweist, an denen die Schaltglieder (12) in Schienenlängsrichtung verstellbar angeordnet sind.

8. Spanneinrichtung nach Anspruch 6 oder 7, dadurch gekennzeichnet, daß der Führungsdeckel (20) mit Langlöchern (30, 31) versehen ist, deren Längsachsen in axialer Richtung verlaufen und die zur Befestigung des Führungsdeckels (20) am Verteilergehäuse (5) dienen.

9. Spanneinrichtung nach Anspruch 7, dadurch gekennzeichnet, daß die Tragschienen (28, 29) mit Längsschlitzen (34 bis 37) versehen sind, in denen die Schaltstücke (13) verschiebbar geführt und an den Tragschienen (28, 29) feststellbar sind.

10. Spanneinrichtung nach einem der Ansprüche 7 bis 9, dadurch gekennzeichnet, daß die Tragschienen (28, 29) jeweils in Schienenlängsrichtung verlaufende und im Schienenquerschnitt gegeneinander geneigte Tragflansche (39a, 39b) aufweisen.

## Claims

1. A clamping device on machine tools comprising a rotating clamping cylinder (1) and a clamping piston (2) which is axially displaceable and arranged therein to rotate therewith, further comprising a distributor (4) which includes a distributor housing (5) carrying the connections (6) for the working medium and a distributor shaft (7) which is connected to the clamping piston (2) and which is axially displaceable in the wall of the clamping cylinder (1) and on which the distributor housing (5) is so arranged that the distributor shaft (7) can rotate therein and entrains the distributor housing (5) in the axial movements of the clamping piston (2), and a control device for the axial movements of the clamping piston (2) comprising at least one switching portion (13) and at least one switching member (12) actuable thereby, of which the switching member (12) is connected to the distributor housing (5) and the switching portion (13) is arranged on a switching bar (14) which is axially longitudinally displaceably guided in a guide mounting (15) on the distributor housing (5) and which is further connected at the end towards the clamping piston (2) to a slider (16) and which is fixed to prevent axial movements thereof relative to the clamping cylinder (1) by means of a rotary bearing (17) arranged on the clamping cylinder (1), for which purpose the bearing (17) has a rotatable and axially immovable bearing race (18) which is coaxial with respect to the clamping cylinder (1) and on which the slider (16) is radially displaceably carried with axial positively locking engagement, characterised in that the guide mounting (15) is divided into a guide shell (19) arranged on the distributor housing (5) and a guide cover (20) which can be opened and that when the guide cover (20) is opened the switching bar (14) with the slider (16) and the switching portion (13) can be removed from or fitted into the guide shell (19) transversely to the axis of the bar.

2. A clamping device according to claim 1 characterised in that the switching bar (14) is arranged non-rotatably about the axis of the bar in the guide mounting (15) and is non-rotatably connected to the slider (16).

3. A clamping device according to claim 1 or claim 2 characterised in that the switching bar (14) and the guide mounting (15) are of a square or rectangular cross-section.

4. A clamping device according to one of claims 1 to 3 characterised in that the slider (16) has jaws (21, 22) which embrace the bearing race (18) on both sides thereof in the axial direction and has a projection (23) which is arranged between the jaws and which radially engages into an opening in the bearing race (18) in positively locking engagement in the peripheral direction.

5. A clamping device according to one of claims 1 to 4 characterised in that the switching bar (14) is screwed to the slider (16) and the slider (16) has a shoulder (27) which bears laterally against the switching bar (14) and which prevents it from rotating on the switching bar (14).

6. A clamping device according to one of claims 1 to 5 characterised in that the guide cover (20) is in the form of a carrier for the switching members (12).

7. A clamping device according to claim 6 characterised in that the guide cover (20) has support rails (28, 29) which extend parallel to the switching bar (14) and on which the switching members (12) are arranged displaceably in the longitudinal direction of the rails.

8. A clamping device according to claim 6 or claim 7 characterised in that the guide cover (20) is provided with slots (30, 31) whose longitudinal axes extend in the axial direction and which serve to fix the guide cover (20) to the distributor housing (5).

9. A clamping device according to claim 7 characterised in that the support rails (28, 29) are provided with longitudinal slots (34 to 37) in which the switching portions (13) are displaceably guided and can be fixed to the support rails (28, 29).

10. A clamping device according to one of claims 7 to 9 characterised in that the support rails (28, 29) respectively comprise support flanges (39a, 39b) which extend in the longitudinal direction of the rails and which are inclined relative to each other in the rail cross-section.

## Revendications

1. Dispositif de serrage installé sur des machines-outils, comportant un vérin rotatif de serrage (1) et un piston de serrage (2), disposé de manière à pouvoir tourner conjointement dans le vérin de serrage et déplaçable axialement, et en outre un distributeur (4), qui comprend un carter (5) portant les raccords (6) pour le milieu de travail et un arbre (7) relié au piston de serrage (2) et déplaçable axialement dans la paroi du vérin de serrage (1) et sur lequel est disposé le carter (5) du distributeur de telle sorte que l'arbre (7) du distributeur peut tourner à l'intérieur du carter et entraîne le carter (5) du distributeur dans le cas de déplacements axiaux du piston de serrage (2), et comportant un dispositif de contrôle des déplacements axiaux du piston de serrage (2), constitué par au moins un élément de commutation (13) et au moins un organe de commutation (12) pouvant être actionné par cet élément de commutation et qui est relié au carter (5) du distributeur, tandis que l'élément de commutation (13) est disposé sur une barre de commutation (14) qui est guidée de manière à être déplaçable axialement dans le sens longitudinal dans un logement de guidage (15) prévu dans le carter (5) du distributeur et qui est en outre raccordé à la face frontale, tournée vers le piston de serrage (2), d'un curseur (16) et qui est bloquée, au moyen d'un palier rotatif (17) disposé sur le vérin de serrage (1), vis-à-vis de déplacements axiaux par rapport au vérin de serrage (1), le palier rotatif (17) comportant à cet effet une bague (18) apte à tourner sans possibilité de déplacement axial, et coaxiale au vérin de serrage (1) et sur laquelle le curseur (16) est monté de manière à se déplacer radialement moyennant une liaison axiale par formes complémentaires, caractérisé en ce que le logement de guidage (15) est subdivisé en une coque de guidage (19) disposée sur le capteur (5) du distributeur, et en un couvercle de guidage (20), qui peut être ouvert, et que, lorsque le couvercle de guidage (20) est ouvert, la barre de commutation (14) équipée du curseur (16) et de l'élément de commutation (13) peut être retirée transversalement par rapport à l'axe de la barre, hors de la coque de guidage (19), ou peut être insérée dans cette coque.

2. Dispositif de serrage selon la revendication 1, caractérisé en ce que la barre de commutation (14) est disposée, sans possibilité de rotation autour de l'axe de la barre, dans le logement de guidage (15) et est raccordée avec blocage en rotation au curseur (16).

3. Dispositif de serrage selon la revendication 1 ou 2, caractérisé en ce que la barre de commutation (14) et le logement de guidage (15) possèdent une section transversale carrée ou rectangulaire.

4. Dispositif de serrage selon l'une des revendications 1 à 3, caractérisé en ce que le curseur (16) possède des mâchoires (21,22), qui enserrent axialement des deux côtés la bague (18) du palier, et un ergot (23) intercalé entre ces mâchoires et qui s'engage radialement, selon une liaison par formes complémentaires dans la direction circonférentielle, dans un évidement de la bague (18) du palier.

5. Dispositif de serrage selon l'une des revendications 1 à 4, caractérisé en ce que la barre de commutation (14) est vissée au curseur (16) et que le curseur (16) possède un épaulement (27), qui s'applique latéralement contre la barre de commutation (14) et empêche le curseur de tourner sur la barre de commutation (14).

6. Dispositif de serrage selon l'une des revendications 1 à 5, caractérisé en ce que le couvercle de guidage (20) est agencé sous la forme d'un support des organes de commutation (12).

7. Dispositif de serrage selon la revendication 6, caractérisé en ce que le couvercle de guidage (20) possède des rails de support (28,29), qui s'étendent parallèlement à la barre de commutation (14) et sur lesquels les organes de commutation (12) sont disposés de manière à être déplaçables dans la direction longitudinale des rails.

8. Dispositif de serrage selon la revendication 6 ou 7, caractérisé en ce que le couvercle de guidage (20) comporte des trous allongés (30,31), dont les axes longitudinaux s'étendent dans la direction axiale et qui sont utilisés pour la fixation du couvercle de guidage (20) sur le carter (5) du distributeur.

9. Dispositif de serrage selon la revendication 7, caractérisé en ce que les rails de support (28,29) sont pourvus de fentes longitudinales (34 à 37), dans lesquelles les éléments de commutation (13) peuvent se déplacer d'une manière guidée et peuvent être bloqués contre les rails de support (28,29).

10. Dispositif de serrage selon l'une des revendications 7 à 9, caractérisé en ce que les rails de support (28,29) possèdent des brides de support (39a,39b), qui s'étendent respectivement dans la direction longitudinale des rails et sont inclinées l'une par rapport à l'autre dans la section transversale des rails.
